# EUROPÄISCHE PATENTSCHRIFT

(11) **EP 3 400 327 B1**
(45) Veröffentlichungstag und Bekanntmachung des Hinweises auf die Patenterteilung: **31.08.2022**
(21) Anmeldenummer: 17705775.9
(22) Anmeldetag: 05.01.2017
(51) Int. Cl.: D02G 3/18, C03C 13/00

(54) **VERFAHREN ZUR HERSTELLUNG EINES HOCHTEMPERATURBESTÄNDIGEN ANORGANISCHEN GARNS MIT ERHÖHTER ZUGFESTIGKEIT**
METHOD FOR THE PRODUCTION OF A HIGH TEMPERATURE-RESISTANT INORGANIC YARN HAVING AN INCREASED TENSILE STRENGTH
PROCÉDÉ DE FABRICATION D'UN FIL INORGANIQUE À HAUTE RÉSISTANCE THERMIQUE PRÉSENTANT UNE RÉSISTANCE ACCRUE À LA TRACTION

(30) Priorität: 08.01.2016 DE 102016100239
(43) Veröffentlichungstag der Anmeldung: 14.11.2018
(73) Patentinhaber: BELCHEM GmbH, 09599 Freiberg (DE)
(72) Erfinder: AL DAKHEEL, Rassmee, 01067 Dresden (DE)
(74) Vertreter: Stoppkotte, Cornelia
(86) Internationale Anmeldenummer: PCT/DE2017/100006
(87) Internationale Veröffentlichungsnummer: WO 2017/118457

(56) Entgegenhaltungen:
- BE-A- 435 086
- CN-A- 101 654 833
- CN-A- 102 864 542
- CN-B- 102 839 476

## Beschreibung

Die vorliegende Erfindung betrifft ein Verfahren zur Herstellung eines hochtemperaturbeständigen anorganischen Garns mit erhöhter Zugfestigkeit aus hochtemperaturbeständigem anorganischem Glasstapelfaservorgarn auf Kieselsäurebasis.

Es gibt eine Vielzahl anorganischer Fasern im Hochtemperatursegment. Beispiele sind unter anderem Silex^{®}-Fasern, Silikafasern, Glasfasern, keramische Fasern, biolösliche Fasern, polykristalline Fasern und Quarzfasern. Diese hochtemperaturbeständigen Fasern sind praktisch in allen Bereichen des Lebens, in denen hohe Temperaturen beherrscht werden müssen, präsent. Anwendungen finden sich in allen Industrien, von großindustriellen Anlagen wie der Verhüttung von metallischen Erzen, der Stahl- und Aluminiumerzeugung, Industrieofenbau, Luft- und Raumfahrt, Brandschutz in Gebäuden, bis zu Verstärkung von Kunststoffen und Betonen, Haushaltsgerätetechnik und in den Emissionskontrollanlagen der Automobil- und Nutzfahrzeugindustrie.

Anorganische Fasern haben in moderneren High-tech-Anwendungen neben der Funktion der Hochtemperaturwärmedämmung und -isolierung noch häufig weitere Funktionen zu erfüllen, die stark von ihren mechanischen Kennwerten abhängen. Als Beispiel können Verstärkungsfasern angeführt werden, die neben ihrer funktionalisierten Oberfläche zur besseren Anbindung an ihr umgebendes Medium gleichzeitig möglichst hohe Zugfestigkeiten aufweisen sollten. Viele Faserwerkstoffe werden in textiltechnischen Folgeprozessen wie Garnen, Zwirnen, Weben, Stricken u. ä. zu textilen Produkten weiterverarbeitet. Auch hier sind die mechanischen Kennwerte von großer Bedeutung, um z.B. Abrisse bei Zwirn- oder Webprozessen zu vermeiden.

Wichtige Einsatzgebiete für hochtemperaturbeständige Garn- und Textilstrukturen sind beispielsweise Hitze-, Brand- und Personen- sowie Feuerschutztextilien, z.B. als Feuerschutzvorhang, als Ersatz für schwer entflammbare Heimtextilien, als Lamellengardinen und als Bezugsstoffe für öffentliche Gebäude und Verkehrsmittel wie Flugzeuge, Eisenbahnen und den gesamten öffentlichen Personennahverkehr.

Produkte aus hochtemperaturbeständigen Glasfasern auf Kieselsäurebasis weisen aufgrund ihrer hervorragenden Hitzebeständigkeit, Flammenbeständigkeit, niedriger Wärmeleitfähigkeit sowie mechanischen, physikalischen und chemischen Eigenschaften ein hohes Einsatzpotential für Hitze-, Brand- und Personenschutzanwendungen auf.

Jedoch werden die Glasfasern auf Kieselsäurebasis bisher nur als Endlosfilament oder Stapelfaser eingesetzt. Stapelfasergarne oder -zwirne weisen wegen der Faserstruktur im Vergleich zu Garnen oder Zwirnen aus Endlosfilamenten eine geringe Zugfestigkeit auf. Glasstapelfasergarne mit erhöhter Zugfestigkeit stehen bisher nicht zur Verfügung, wären aber wegen der möglichen Anwendungen in textilen Produkten wünschenswert.

Glasstapelfaservorgarne oder -bänder können beispielsweise nach dem sogenannten Abzugstrommelverfahren hergestellt werden (DE-AS 1 270 748, DE-PS 1 199 935, DE-OS 195 05 618). Bei diesen Verfahren läuft geschmolzenes Glas durch Spinndüsen aus, die sich am Boden einer Schmelzwanne befinden. Die Elementarglasfäden (Filamente) werden im Anschluss über eine rotierende Trommel abgezogen, wobei die Glasfäden, mittels eines Abstreichers und luftstromunterstützt, in Glasfasern mit uneinheitlicher Stapellänge zerlegt und zur Erzeugung eines Faserbandes in eine parallel zur Trommelachse liegende Vorrichtung gefördert werden. Die Festigkeit und Geschlossenheit des Glasstapelfaservorgarnes sind dabei Funktionen der Abzugsgeschwindigkeit.

Al₂O₃-haltige hochtemperaturbeständige anorganische Glasstapelfaservorgarne auf Kieselsäurebasis und deren Herstellung werden beispielsweise in dem früheren Europäischen Patent Nr. 0 973 697 B1 beschrieben.

Eine Faser mit verbesserten Eigenschaften mit einem erhöhten Gehalt an Titandioxid und/oder Zirkoniumdioxid wird in der früheren Patentanmeldung EP 08 784 309.0 (siehe EP 2 173 676) beschrieben.

Bei den vielfältigen Anforderungen an moderne Garne im Hinblick auf Hochtemperaturbeständigkeit einerseits und gute mechanische Eigenschaften wie z.B. Zugfestigkeit, Bruchkraft, Elastizität usw. andererseits besteht trotz der Vielzahl an bisher verfügbaren Garnen nach wie vor ein Bedarf für Garne mit verbesserten Eigenschaften.

CN-A-101 654 833, CN-A-102 864 542 und CN-B-102 839 476 beschreiben eine thermische Behandlung zwischen 600°C und 750°C für Glasgarn auf Kieselsäurebasis. BE-A-435 086 beschreibt eine thermische Behandlung mit niedriger Temperatur für Glasgarn.

Aufgabe der vorliegenden Erfindung ist daher, Garne aus hochtemperaturbeständigem anorganischem Glasstapelfaservorgarn auf Kieselsäurebasis bereitzustellen, die im Vergleich zu den bisher bekannten hochtemperaturbeständigen anorganischen Garnen eine erhöhte Zugfestigkeit aufweisen.

Die Aufgabe wird gelöst durch ein Verfahren zur Herstellung von Garnen mit erhöhter Zugfestigkeit gemäß Anspruch 1.

Der gegenwärtige Erfinder hat überraschend gefunden, dass eine thermische Behandlung des Garns im Anschluss an die Herstellung aus dem Stapelfaservorgarn die Zugfestigkeit des Garns deutlich erhöht. Dieser Effekt wurde nicht beobachtet, wenn das Ausgangsprodukt, d.h. das Glasstapelfaservorgarn, thermisch behandelt wurde.

Erfindungsgemäß wird ein Verfahren zur Herstellung eines Garns mit erhöhter Zugfestigkeit aus hochtemperaturbeständigem anorganischem Glasstapelfaservorgarn auf Kieselsäurebasis bereitgestellt, das dadurch gekennzeichnet ist, dass hochtemperaturbeständiges anorganisches Glasstapelfaservorgarn auf Kieselsäurebasis zu einem Garn verarbeitet wird und dieses anschließend einer thermischen Behandlung für mindestens 30 Minuten bei 125°C bis 200°C unterzogen wird.

Bevorzugt wird dabei ein Glasstapelfaservorgarn, wie es in EP 0 973 697 B1 beschrieben wird, verwendet.

Die Behandlungsdauer beträgt insbesondere von 30 Minuten bis zu 5 Stunden, vorzugsweise von 1 Stunde bis zu 4 Stunden.

Besonders bevorzugt sind dabei beispielsweise eine Behandlung für 30 Minuten bei 150°C oder eine Behandlung für 4 Stunden bei 125°C.

Dabei gilt allgemein, dass je niedriger die Behandlungstemperatur, desto länger die Behandlungsdauer.

Weiterhin bevorzugt ist es, das Garn vor der thermischen Behandlung langsam über einen Zeitraum von 0,5 bis 1,5 Stunden (in den Beispielen als Rampenzeit bezeichnet) auf die

Behandlungstemperatur zu erwärmen. Falls das Garn auf eine Spule aufgewickelt erwärmt wird, sollten während dieses Zeitraums auch die innen liegenden Garnfäden die Behandlungstemperatur erreichen.

Die Verarbeitung zu einem Garn aus dem Glasstapelfaservorgarn erfolgt üblicherweise durch einen textiltechnischen Prozess wie Spinnen oder Zwirnen, insbesondere auf einer Spinnmaschine. Dabei kann beispielsweise das Doppeldrahtzwirnverfahren benutzt werden. Dieses Verfahren ist im Stand der Technik bekannt und wird beispielsweise in dem deutschen Patentdokument Nr. 1168808 beschrieben.

Bei der Verarbeitung zu einem Garn auf einer Spinnmaschine läuft das Glasstapelfaservorgarn in der Regel über diverse Spulen bzw. Rollen oder Walzen, und auch das fertige Garn wird auf einer Spule erhalten.

Vorzugsweise wird das Glasstapelfaservorgarn aufgewickelt auf einer Garnspule so wie es nach dem Spinnverfahren erhalten wird der thermischen Behandlung unterzogen. Die Spule kann dabei z.B. in einer Trockenkammer über einen bestimmten Zeitraum hinweg auf die Behandlungstemperatur aufgewärmt und dann für einen gewissen Zeitraum bei dieser Temperatur gehalten werden.

Das hochtemperaturbeständige anorganische Glasstapelfaservorgarn auf Kieselsäurebasis wird vorzugsweise durch Säureextraktion eines Glasstapelfaservorgarns der folgenden Zusammensetzung erhalten:
70-75 Gew.-% SiO₂
15-25 Gew.-% Na₂O und/oder K₂O
1 bis 5 Gew.-% Al₂O₃
sowie bis zu maximal 5 Gew.-% weitere Komponenten.

Somit ist es bevorzugt Al₂O₃-haltig.

Das hochtemperaturbeständige Glasstapelfaservorgarn enthält dabei vorzugsweise die folgenden Komponenten in den angegebenen Gewichtsanteilen:
94 bis 99 Gew.-% SiO₂, insbesondere 95 bis 98 Gew.-%,
1 bis 5 Gew.-% Al₂O₃, insbesondere 2 bis 5 Gew.-%, und
0 bis 1 Gew.-% Na₂O und/oder K₂O
bezogen auf das Gesamtgewicht der genannten Komponenten.

Die Erfindung betrifft weiterhin ein hochtemperaturbeständiges anorganisches Garn mit erhöhter Zugfestigkeit, das gemäß dem oben beschriebenen Verfahren erhalten wird.

Dieses Garn weist insbesondere eine Zugfestigkeit auf, die mindestens doppelt so hoch ist wie die Zugfestigkeit des Garns vor der thermischen Behandlung.

Die Zugfestigkeit des Garns liegt insbesondere in dem Bereich von 6 cN/tex bis 15 cN/tex, besonders bevorzugt bei 10 bis 13 cN/tex. Bei diesen Werten handelt es sich dabei um Mittelwerte.

Die vorliegende Erfindung wird nun weiter anhand von Beispielen beschrieben.

Um den Einfluss der thermischen Behandlung auf die Zugfestigkeit zu zeigen, wurden verschiedene Garne bei verschiedenen Temperaturen getempert bzw. thermisch behandelt.

Die angefügten Figuren zeigen die Verteilung der Zugfestigkeitswerte für einzelne Garne aus den Beispielen 1 bis 3.

### Beispiel 1

Glasstapelfaservorgarn auf Kieselsäurebasis wie oben beschrieben mit einer Feinheit von 180, 275 und 550 tex wurde auf einer Spinnmaschine zu einem Garn gesponnen. Anschließend wurde das auf eine Spule aufgewickelte Garn in einer Trockenkammer wie folgt thermisch behandelt:

| | |
|---|---|
| T0 = 20°C (Raumtemperatur) | |
| T1 = 150°C | Rampenzeit: 1,0 h (von T0 auf T1) |
| | Haltezeit (Behandlungsdauer): 0,5 h |

T0 bezeichnet dabei die Ausgangstemperatur und T1 die Behandlungstemperatur, wobei die Rampenzeit den Zeitraum angibt, über welchen das Garn von der Ausgangstemperatur auf die Behandlungstemperatur erwärmt wurde, und schließlich die Haltezeit angegeben ist, für welche das Garn bei der Behandlungstemperatur gehalten wurde.

Anschließend wurde das Garn wieder auf Raumtemperatur (20°C) abgekühlt und die Zugfestigkeit wurde nach der Norm DIN 3341 gemessen. Parallel dazu wurde die Zugfestigkeit eines entsprechenden Garns gemessen, das nicht thermisch behandelt wurde.

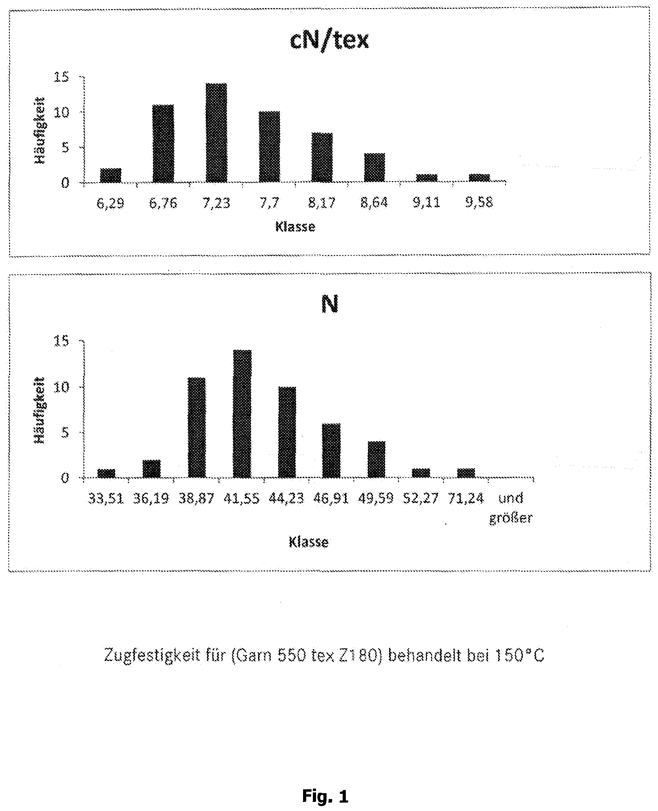

Die Ergebnisse sind in der folgenden Tabelle 1 gezeigt. Bei den Zugfestigkeitswerten handelt es sich dabei um Mittelwerte, wobei eine Verteilung für eine Messung in Fig. 1 dargestellt ist.

**Tabelle 1**

| Produkt | Zugfestig keit unbehandeltes Garn (cN/tex) | Zugfestigkeit unbehandeltes Garn (N) | Zugfestigkeit behandeltes Garn (cN/tex) | Zugfestigkeit behandeltes Garn (N) |
|---|---|---|---|---|
| 550 tex Z180 | 5,8 | 34,04 | 7,2 | 41,8 |
| 550 tex X2 S80 | 4,8 | 54 | 7,56 | 84 |
| 275 tex Z180 | 5,7 | 16 | 7,5 | 21 |
| 180 tex Z180 | 6 | 10,3 | 7,8 | 13,5 |

Z180 bedeutet dabei, dass das Garn aus dem Vorgarn mit 180 Drehungen in Z-Richtung hergestellt wurde, und X2, dass es sich aus einen Zwirn aus zwei Garnen handelt.

### Beispiel 2

Der Versuch aus Beispiel 1 wurde mit veränderten Temperaturen und Zeiten wiederholt. Diese waren wie folgt:

| | |
|---|---|
| T0 = 20°C (Raumtemperatur) | |
| T1 = 200°C | Rampenzeit: 1 h |
| | Haltezeit: 2,0 h |

Anschließend wurden die Garne wieder auf Raumtemperatur abkühlen gelassen und wie oben gegen unbehandelte Vergleichsgarne gemessen.

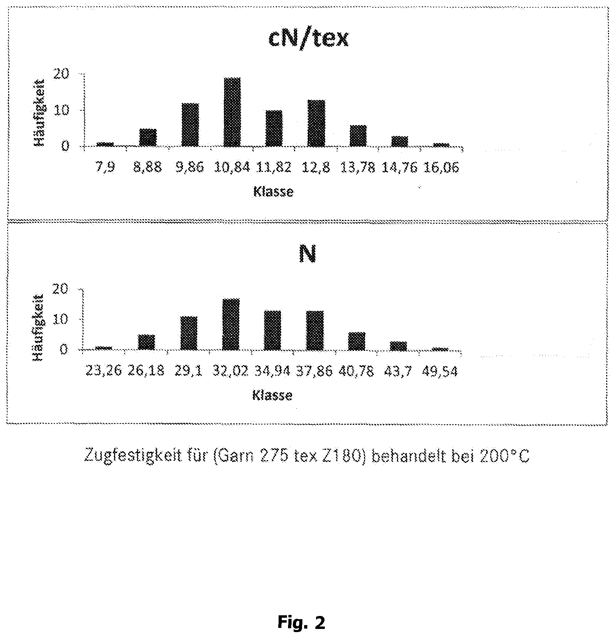

Die Ergebnisse sind in der folgenden Tabelle 2 sowie in Fig. 2 dargestellt.

**Tabelle 2**

| Produkt | Zugfestig keit unbehandeltes Garn (cN/tex) | Zugfestigkeit unbehandeltes Garn (N) | Zugfestigkeit behandeltes Garn (cN/tex) | Zugfestigkeit behandeltes Garn (N) |
|---|---|---|---|---|
| 180 tex Z180 | 6 | 12 | 13 | 25 |
| 275 tex Z180 | 7,5 | 21 | 12 | 33 |
| 550 tex Z100 | 6,07 | 35,25 | 10,5 | 60 |

### Beispiel 3

Der Versuch aus Beispiel 1 wurde mit veränderten Temperaturen und Zeiten wiederholt. Diese waren wie folgt:

| | |
|---|---|
| T0 = 20°C (Raumtemperatur) | |
| T1 = 125°C | Rampenzeit: 1 h |
| | Haltezeit: 4,0 h |

Anschließend wurden die Garne wieder auf Raumtemperatur abkühlen gelassen und wie oben gegen unbehandelte Vergleichsgarne gemessen.

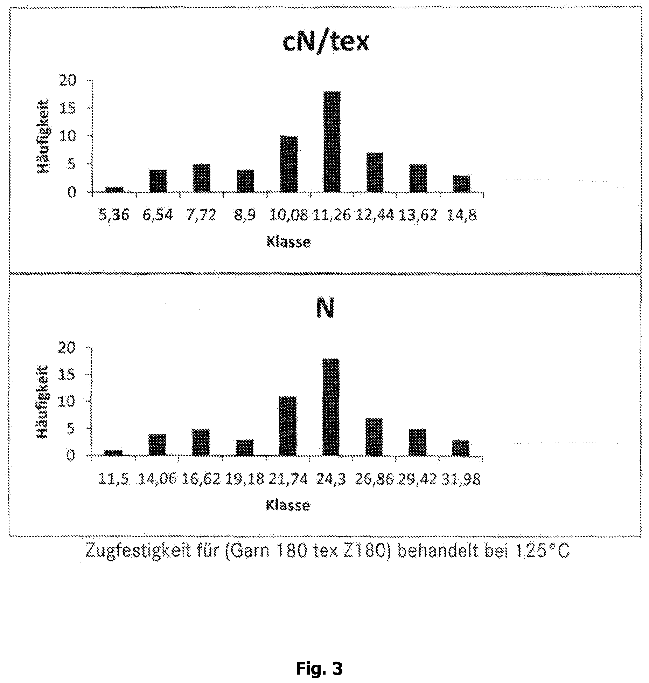

Die Ergebnisse sind in der folgenden Tabelle 3 sowie in Fig. 3 dargestellt.

**Tabelle 3**

| Produkt | Zugfestig keit unbehandeltes Garn (cN/tex) | Zugfestigkeit unbehandeltes Garn (N) | Zugfestigkeit behandeltes Garn (cN/tex) | Zugfestigkeit behandeltes Garn (N) |
|---|---|---|---|---|
| 180 tex Z180 | 6 | 12 | 13 | 25 |
| 275 tex Z180 | 7,5 | 21 | 12 | 34 |
| 550 tex Z100 | 6,07 | 35,25 | 10,5 | 60 |

Die Versuche haben gezeigt, dass die Zugfestigkeit der Garne durch die thermische Behandlung deutlich erhöht werden konnte. Dabei führte eine Behandlung für 4 Stunden bei 125°C zu einem ähnlichen Ergebnis wie eine Behandlung für 2 Stunden bei 200°C.

### Beispiel 4

Um zu zeigen, dass nur die thermische Behandlung des gesponnen Garns und nicht schon eine thermische Behandlung des Glasstapelfaservorgarns zu einer Erhöhung der Zugfestigkeit führt, wurden Garne aus getemperten Vorgarnen und aus unbehandelten Vorgarnen gesponnen.

Dafür wurden verschieden Vorgarnspulen mit einer Feinheit von 550 tex und einem Faserdurchmesser von 9 µm ausgesucht. Aus diesen Vorgarnspulen wurden verschiedene Garnfeinheiten hergestellt, und dann wurden sowohl die Garnspulen als auch die Vorgarnspulen in einem Trockenschrank zur Behandlung liegen lassen.

Nach der Behandlung wurden nochmal verschiedene Garne aus diesen getemperten Vorgarnen hergestellt.

Bei jedem Schritt wurde die Zugfestigkeit der Garne nach der Norm DIN 3341 gemessen.

### 4.1 Das Garn 550tex Z100

Zuerst wurde das Garn aus einem getrockneten Vorgarn mit 100 Drehungen in Z-Richtung hergestellt, dann wurde die Zugfestigkeit des Garns gemessen, und anschließend wurden das Garn und das Vorgarn unter den folgenden Bedingungen behandelt:

| | |
|---|---|
| T0 = 20°C (Raumtemperatur) | |
| T1 = 125°C | Rampenzeit: 1 h (T0 bis T1) |
| | Haltezeit: 4,0 h |

Danach wurden Garn und Vorgarn bis auf Raumtemperatur abkühlen gelassen, was ca. 1 h dauerte, und anschließend gemessen.

Weiterhin wurde ein Garn (550tex Z100) aus dem thermisch behandelten Vorgarn hergestellt und die Zugfestigkeit gemessen.

Die Ergebnisse sind in der folgenden Tabelle 4 dargestellt.

**Tabelle 4**

| Produkt | Zugfestigkeit (cN/tex) | Zugfestigkeit (N) |
|---|---|---|
| 550tex Z100 Normal ohne Behandlung | 6,01 | 35 |
| 550tex Z100 (behandeltes Garn) | 10,12 | 58,46 |
| 550tex Z100 aus behandeltem Vorgarn | 6,07 | 35,54 |

### 4.2 Das Garn 550tex Z55

Das Garn wurde wie oben beschrieben aber mit 55 Drehungen in Z-Richtung hergestellt und wie folgt behandelt.

| | |
|---|---|
| T0 = 20°C (Raumtemperatur) | |
| T1 = 125°C | Rampenzeit: 1 h (T0 bis T1) |
| | Haltezeit: 4,0 h |

Nach Abkühlung auf Raumtemperatur wurde wieder gemessen, wobei ebenfalls parallel ein aus einem wie oben thermisch behandeltem Vorgarn hergestelltes Garn gemessen wurde.

Die Ergebnisse sind in der folgenden Tabelle 5 dargestellt.

**Tabelle 5**

| Produkt | Zugfestigkeit (cN/tex) | Zugfestigkeit (N) |
|---|---|---|
| 550tex Z55 Normal ohne Behandlung | 3,4 | 19,61 |
| 550tex Z55 aus behandeltem Vorgarn | 3,19 | 18,40 |

### 4.3 Das Garn 550tex Z180

Analog zu 4.1 und 4.2 wurde ein weiteres Garn bzw. Vorgarn wie folgt behandelt und anschließend abkühlen gelassen.

| | |
|---|---|
| T0 = 20°C | |
| T1 = 150°C | Rampenzeit: 1,0 h (T0 bis T1) |
| Haltezeit: | 0,5 h |

Die Ergebnisse der Zugfestigkeitsmessungen sind in der folgenden Tabelle 6 dargestellt.

**Tabelle 6**

| Produkt | Zugfestigkeit (cN/tex) | Zugfestigkeit (N) |
|---|---|---|
| 550tex Z180 Normal ohne Behandlung | 5,8 | 34 |
| 550tex Z180 (behandeltes Garn) | 7,2 | 42 |
| 550tex Z180 aus behandeltem Vorgarn | 6,3 | 36 |

Die in Beispiel 4 durchgeführten Versuche zeigen eindeutig, dass eine Erhöhung der Zugfestigkeit nur durch eine thermische Behandlung des Garns und nicht durch eine thermische Behandlung des Vorgarns erzielt werden kann. Die Zugfestigkeit von aus thermisch behandelten Vorgarnen hergestellten Garnen entsprach der Zugfestigkeit der Garne, die aus nicht thermisch behandelten Vorgarnen hergestellt wurden.

## Patentansprüche

1. Verfahren zur Herstellung eines Garns mit erhöhter Zugfestigkeit aus hochtemperaturbeständigem anorganischem Glasstapelfaservorgarn auf Kieselsäurebasis, **dadurch gekennzeichnet, dass** hochtemperaturbeständiges anorganisches Glasstapelfaservorgarn auf Kieselsäurebasis zu einem Garn verarbeitet wird und dieses anschließend einer thermischen Behandlung für mindestens 30 Minuten bei 125°C bis 200°C unterzogen wird.

2. Verfahren nach Anspruch 1, **dadurch gekennzeichnet, dass** die Behandlungsdauer von 30 Minuten bis zu 5 Stunden, vorzugsweise von 1 Stunde bis zu 4 Stunden beträgt.

3. Verfahren nach einem der Ansprüche 1 bis 2, **dadurch gekennzeichnet, dass** die Behandlungsdauer 30 Minuten bei einer Behandlungstemperatur von 150°C oder 4 Stunden bei einer Behandlungstemperatur von 125°C beträgt.

4. Verfahren nach einem der Ansprüche 1 bis 3, **dadurch gekennzeichnet, dass** das Garn vor der thermischen Behandlung über einen Zeitraum von 0,5 bis 1,5 Stunden auf die Behandlungstemperatur erwärmt wird.

5. Verfahren nach einem der Ansprüche 1 bis 4, **dadurch gekennzeichnet, dass** die Verarbeitung zu einem Garn aus dem Glasstapelfaservorgarn durch einen textiltechnischen Prozess wie Spinnen oder Zwirnen, insbesondere auf einer Spinnmaschine, erfolgt.

6. Verfahren nach einem der Ansprüche 1 bis 5, **dadurch gekennzeichnet, dass** das hochtemperaturbeständige Glasstapelfaservorgarn auf Kieselsäurebasis Al₂O₃-haltig ist.

7. Verfahren nach einem der Ansprüche 1 bis 6, **dadurch gekennzeichnet, dass** das hochtemperaturbeständige Glasstapelfaservorgarn die folgenden Komponenten in den angegebenen Gewichtsanteilen enthält:
94 bis 99 Gew.-% SiO₂
1 bis 5 Gew.-% Al₂O₃
0 bis 1 Gew.-% Na₂O und/oder K₂O
bezogen auf das Gesamtgewicht der genannten Komponenten.

## Claims

1. A process for producing a yarn having an increased tensile strength which is based on a high-temperature resistant inorganic glass sliver on silica basis, **characterized in that** high-temperature resistant inorganic glass sliver on silica basis is processed to a yarn and this subsequently is subjected to a thermal treatment for at least 30 minutes at 125°C to 200°C.

2. Process according to claim 1, **characterized in that** the duration of the treatment is from 30 minutes up to 5 hours, preferably from 1 hour up to 4 hours.

3. Process according to one of claims 1 to 2, **characterized in that** the duration of the treatment is 30 minutes at a treatment temperature of 150°C or 4 hours at a treatment temperature of 125°C.

4. Process according to one of claims 1 to 3, **characterized in that** prior to the thermal treatment the yarn is heated to the treatment temperature over a period of 0.5 to 1.5 hours.

5. Process according to one of claims 1 to 4, **characterized in that** the processing of the glass sliver to a yarn takes place via a textile technical process such as spinning or twisting, in particular on a spinning machine.

6. Process according to one of claims 1 to 5, **characterized in that** the high-temperature resistant glass sliver on silica basis comprises Al₂O₃.

7. Process according to one of claims 1 to 6, **characterized in that** the high-temperature resistant glass sliver comprises the following components in the specified weight proportions:
94 to 99% by weight of SiO₂
1 to 5% by weight of Al₂O₃
0 to 1% by weight of Na₂O and/or of K₂O,
based on the total weight of the named components.

## Revendications

1. Procédé destiné à fabriquer un fil présentant une résistance accrue à la traction à partir d'un ruban de verre inorganique à haute résistance thermique à base d'acide silicique, **caractérisé en ce qu'**un ruban de verre inorganique a haute résistance thermique à base d'acide silicique est transformée en un fil et ensuite ce fil est soumis à un traitement thermique pour au moins 30 minutes à 125°C à 200°C.

2. Procédé selon la revendication 1, **caractérisé en ce que** la durée de ce traitement se monte aux 30 minutes à 5 heures, de préférence 1 heure à 4 heures.

3. Procédé selon l'une des revendications 1 à 2, **caractérisé en ce que** la durée de ce traitement se monte à 30 minutes à une température de traitement de 150°C ou 4 heures à une température de traitement de 125°C.

4. Procédé selon l'une des revendications 1 à 3, **caractérisé en ce que** devant le traitement thermique ce fil est chauffé à la température de traitement pendant une durée de 0,5 à 1,5 heures.

5. Procédé selon l'une des revendications 1 à 4, **caractérisé en ce que** la transformation du ruban de verre à un fil se tient à l'aide d'un procédé textile technique comme le filage ou le retordage, en particulier avec une machine à filer.

6. Procédé selon l'une des revendications 1 à 5, **caractérisé en ce que** le ruban de verre à haute résistance thermique à base d'acide silicique contient Al₂O₃.

7. Procédé selon l'une des revendications 1 à 6, **caractérisé en ce que** le ruban de verre à haute résistance thermique contient les composants suivants dans les proportions en poids indiquées:
94 à 99% en poids de SiO₂
1 à 5% en poids de Al₂O₃
0 à 1% en poids de Na₂O et/ou de K₂O,
par rapport au poids total des composants citée.
